(19) Europäisches Patentamt
European Patent Office
Office européen des brevets

(11) **EP 4 421 483 A1**

(12) **EUROPEAN PATENT APPLICATION**

(43) Date of publication:
**28.08.2024 Bulletin 2024/35**

(21) Application number: **23382176.8**

(22) Date of filing: **27.02.2023**

(51) International Patent Classification (IPC):
**G01N 27/22** (2006.01) **H02N 1/04** (2006.01)
**G01N 15/00** (2024.01) **H02N 11/00** (2006.01)

(52) Cooperative Patent Classification (CPC):
**G01N 27/227; H02N 1/04; H02N 11/002;**
G01N 15/0266; G01N 15/1023; G01N 15/1031;
G01N 2015/0026; G01N 2015/1029

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Consejo Superior De Investigaciones
Científicas
41013 Sevilla (ES)**

(72) Inventors:
• **Ghaffarinejad, Ali
41092 Sevilla (ES)**

• **Barranco Quero, Angel
41092 Sevilla (ES)**
• **García Casas, Xabier
41092 Sevilla (ES)**
• **Borrás Martos, Ana Isabel
41092 Sevilla (ES)**
• **Sánchez Valencia, Juan Ramón
41092 Sevilla (ES)**

(74) Representative: **Pons
Glorieta Rubén Darío 4
28010 Madrid (ES)**

(54) **SELF-POWERED TRIBOELECTRIC TRANSDUCTOR DEVICE FOR DROPS AND LIQUIDS**

(57)     A triboelectric device that acts as self-powered transductor in a reduced scale to obtain physicochemical information instantaneously. The triboelectric transductor device comprises one or more transductors (1) comprising a bottom electrode (2), a charged triboelectric friction element (3) placed over the bottom electrode (2), and at least two top electrodes (4) electrically connected and smaller than the bottom electrode (2) placed over the triboelectric friction element (3) defining at least one gap (5) between them, exposing the triboelectric friction element (3) to the external environment so that on contacting a drop of liquid makes an electrical connection between the top electrodes (4) varying instantaneously the capacitance of the transductor (1) generating an electrical signal containing physicochemical information of the liquid in contact with the device readout by an acquisition and analysis module (7) which comprises at least of a resistive load.

FIG. 1

EP 4 421 483 A1

**Description**

**OBJECT OF THE INVENTION**

The present invention is in the field of environmental protection, environmental sensing and human healthcare, and more specifically is related to a transductor device to determine the physicochemical properties of drops and liquids, being the transductor self-powered. The invention is aimed to obtain chemical and physical information from droplets and liquid flows by using a triboelectric effect and capacitance configuration working from sub-millimetric dimensions.

An object of the present invention is a transductor device having a new configuration for obtaining chemical and physical information from falling drops and liquids in movement. The drops and liquids generate an electrical signal, which contains information on the liquid properties, upon contact with the invention. The size of the invention is adaptable to the volume and contact area of the drops but is preferable in a reduced scale and combinable in the form of an array including a plurality of the inventions to achieve multidetection.

**BACKGROUND ART**

The field of harvesting ambient environmental energy has gained great interest in the last decade as a response to the ever-increasing demand to find environmentally friendly alternatives to the global dependence on fossil fuels. One of the applications of the field of energy harvesting is to provide electric power for low-power electronic and wireless devices to reduce their dependency on (rechargeable) batteries. The main motive for the design and fabrication of energy harvesting devices is to develop a system capable of converting ambient and free energy from the surrounding environment of the targeted electronic device. The generated energy can directly power up the target device or it can be stored in an energy storage unit for later use.

Sensor technology can widely profit from the implementation of self-powered approaches as the dependency on batteries and grid powering limits their size, wireless application, portability, working lifetime, recyclability, and environmental and implantable compatibility.

Concretely, the use of small health monitoring devices has prompted the development of physicochemical sensors to monitor biomarkers and body secretions such as glucose, uric acid, sweat, also body temperature, body movements or immobility, etc. On their application in environmental protection, for instance, to evaluate water drops (rainwater) or water flows, sensors can be useful to determine the presence of pollutants, impurities or particles, including volatile organic compounds, metal ions, organic matter, microplastics and acidic or basic solvents.

It would be also of interest to monitor the physical properties of drops and liquids, such as the size of the drops, liquid movement direction, fluid regime for displacement, drop and drop/surface relative temperature, drop contact angle, drop falling height, drop velocity, drop viscosity, water condensation, dew point, etc.

In this context, different energy harvesting mechanisms such as photovoltaic, piezoelectricity, pyroelectricity, thermoelectricity and triboelectricity have been proposed for the development of self-powered sensors. Among them, triboelectric nanogenerators can be used in two different approaches to power physico-chemical sensors, i.e., either working as an external power source that generates voltage and current to feed the sensor or implemented in a self-powered configuration, in such a way that either the output voltage or output current from the nanogenerator upon interaction with the analyte is used as the sensing signal, i.e. the triboelectric system is applied as the transductor for the sensor device. The field of interest herein covers the second approach, where the sensing signal is generated upon interaction with the triboelectric element.

The application of the triboelectric effect for the conversion of the kinetic energy from drops and liquids was first settled by the group of Z.L. Wang in the document "Harvesting Water Drop Energy by a Sequential Contact-Electrification and Electrostatic-Induction Process" by Z. H. Lin et al. Adv. Mater. 26, 4690-4696 (2014), which presented the combined mechanism of contact electrification and charge induction to explain the voltage generated upon the contact of a sliding water drop and the surface of a triboelectric layer.

Since then, several reports have established the use of self-powered sensors for drops and liquids based on the triboelectric effect.

In document "A droplet-based electricity generator with high instantaneous power density" by Xu, W., Zheng, H., Liu, Y. et al., Nature 578, 392-396 (2020), a device comprising a triboelectric layer sandwiched between a top (smaller, millimetric) and a bottom (extended, centimetric) electrodes is presented to harvest drop energy that generates different voltages when comparing tap, rain and seawater ($V_{tap} > V_{rain} > V_{sea}$).

A triboelectric-based flow sensor with a possible industrial application is suggested in document "Triboelectric Flow Sensor with Float-Cone Structure for Industrial Pneumatic System Monitoring" by Z. Wang et al., Advanced Materials Technologies 4, 1900704 (2019)., which uses a movable float-cone structure.

A self-powered triboelectric-based flow sensor is fabricated and tested in document "A Self-Powered and Low-Pressure Loss Gas Flowmeter Based on Fluid-Elastic Flutter Driven Triboelectric Nanogenerator" by T. K. Phan et al.,

Sensors 20, 729 (2020)., that employs a polymer PTFE flutter to sense the water flow.

In document "Self-powered multifunctional monitoring and analysis system based on dual-triboelectric nanogenerator and chitosan/activated carbon film humidity sensor", by Z. Xu, et al., Nano Energy 94, 106881 (2022)., a humidity sensor is reported in which a dual triboelectric nanogenerator is used and humidity is sensed with active carbon film.

In document "Self-powered rain droplet sensor based on a liquid-solid triboelectric nanogenerator" by Y. Zeng, et al., Nano Energy 98, 107316 (2022), a self-powered rain droplet sensor is proposed for buried-electrode systems covered by a triboelectric layer. The configuration shows different voltage intensities for different tilting angles of the triboelectric layer with respect to the droplet direction. The contact of the drop with the surface of the triboelectric layer produces a voltage peak with a duration in the order of 20 milliseconds. The device is shown as a self-powered sensor for rain and for droplet falling velocity.

In document "Real-Time Acid Rain Sensor Based on a Triboelectric Nanogenerator Made of a PTFE-PDMS Composite Film" by Haiwei Liu, et al., ACS Appl. Electron. Mater. 3, 4162-4171 (2021)., the authors report a self-powered triboelectric sensor comprising a triboelectric layer between an extended bottom electrode and a top electrode that has a linear response for changes in water pH, the peak voltage duration is in the range of 10 milliseconds.

Document CN105099260 describes a flowing liquid-based composite power generator. The power generator can be used as a self-powered sensor to detect the concentration of ethanol in a solution. The power generator is mainly formed by stacking an electrostatic induction power generation set and a contact friction power generation set. When a liquid, such as rainwater or water in the environment touches the power generator, the static electricity from the water can make the electrostatic induction power generation set work and produce electricity. The mechanical energy of flowing water can make the contact friction power generator work and produce electricity at the same time and could be enhanced by arranging the power generator in a sloped position.

Several other patent documents have been presented dealing with the development of touch and contact triboelectric sensors and self-powered sensors. No mention is included of their use as a self-powered physicochemical sensor for liquids and drops.

In document US9921678B2 a triboelectric layer is sandwiched between two electrodes and on top of the top electrode a material that becomes electrically charged after being contacted with the finger is emplaced. This device generates a voltage peak upon contact with a finger or different solid materials. An array of such devices in the form of a keyboard is claimed for anticounterfeiting and typing recognition.

Document WO2019/171295A2 deals with a thin film-based readout circuitry for triboelectric touch sensors where the sensing element is based on a thin film transistor coupled to a triboelectric sensor, wherein the transistor is configured to receive the voltage pulse and output signal generated by the contact force or the contact event. Document WO2019/155376 develops about the application of a polymer matrix with defined composition acting as triboelectric layer on top of a single electrode on a substrate with the combination acting as a touch/force responsive sensor.

With a similar sensor architecture, EP3783328A1 presents a force sensor comprising a triboelectric nanocomposite layer combining a carbonate copolymer and a fluoro-containing silsesquioxane compound.

Document EP3742143A1 presents a triboelectric impact sensor including a substrate, an electrode and a triboelectric layer on top of the electrode layer with the electrode connected to a diode bridge configuration to sense an impact on or vibration of the triboelectric sensor.

Several other patent documents have been presented also mainly dealing with the development of harvesters for the kinetic energy of drops and liquids although no mention is included for their use as a self-powered physicochemical sensor: EP3131195A1, US 8742649B2, US10848079B2, US2019280620 and WO15154693.

Document US2019280620 discloses an apparatus and method for collecting ambient energy. The apparatus comprises charge storage devices and switching circuits, configured to cyclically alter the connection between the charge storage devices between a series state and a parallel state. Electrically conductive elements can include electrically conductive liquid droplets of materials such as water or mercury.

In the device, a droplet of conductive liquid can make electrical contact with a parallel metallic contact or with a series of metallic contacts but not with both contacts at the same time. Charge storage devices include a capacitance that varies in response to the reception of ambient energy. The simultaneous alteration of the relative capacitance and circuit configuration results in an exponential growth of the collected energy.

Also, document WO15154693 presents a triboelectric nanogenerator that collects mechanical energy from a liquid. The triboelectric nanogenerator comprises an electricity generation component on an insulating substrate and a friction layer that covers the electricity generation component.

The electricity generating component is constituted by two layers of electrodes arranged separately along a fluctuation direction of the liquid and electrically connected to each other. When the liquid fluctuates or flows, friction occurs between it and the friction layer, so that the surface of the friction layer in contact with the liquid carries charges. As the liquid fluctuates or flows, the charges on the surfaces of the friction layer corresponding to the two electrode layers are successively shielded by ions in the liquid so that an induced charge flow occurs between the two electrode layers.

However, there is yet a need for fast and reliable sensors able to monitor different chemical analytes and physical properties of drops and liquids in a self-powered mode, relying on a simple mechanism and with the potential for multidetection and multiplexing (sensing at the same time different chemical and physical factors but also from multiple analytes at the same time, as it can happen in complex liquids or in multiple drop events).

A current technological urgency is to develop self-powered microscale sensors for detection of chemicals in drops in an instantaneous way (in the order of microseconds to a milliseconds), allowing multidetection performance and miniaturization. A concrete technical need is to find alternative triboelectric transduction mechanisms for physical and chemical liquid detection, nowadays relying solely on the voltage or current output intensity and average power, not showing sufficient selectivity.

## DESCRIPTION OF THE INVENTION

The object of the present invention is a self-powered triboelectric transductor device that takes advantage of the duality for drop energy harvester and physicochemical transductor based on a triboelectric and variable capacitance effect.

The invention harvests or converts the energy of falling droplets or moving liquids on the surface of a friction or triboelectric layer, foil, coating, bulk or plate, which will be referred as friction or triboelectric or triboelectric friction element, by using the triboelectric effect. The shape, duration and intensity of the generated voltage or current peak and the average power value, as well as these magnitudes recorded under different resistive loads or other impedance or circuit elements, produced upon the interaction between the drop or the moving liquid with the invention can be used as transduction signal for physico-chemical properties.

The triboelectric transductor device produces the voltage upon contact electrification and variable capacitance effects in response to the contact with the liquid or drop without reliance on an external power supply, working in a self-powered mode. Thus, the invention presents the duality of being at the same time the transductor and the power generator required to produce the sensing signal.

The integration of the triboelectric transductor device with a signal processing circuit allows the development of sensing systems to extract information such as the chemical composition, ionic concentration, conductivity, viscosity, contact angle, volume or contact area, kinetic energy, liquid temperature, etc. The size of the invention is intended to obtain such information instantaneously (time scales ranging from microseconds to milliseconds).

The objective of the invention is to produce an electrical signal from the fall and/or movement of liquid drops or liquid flow on a triboelectric surface as a sensing signal without the need for an active power source. This means that the transductor device is working in the self-powered mode.

Therefore, in a first step, the invention works as a power source or an energy harvesting device to generate electric energy based on the instantaneous capacitance variation that occurs when a drop or a conductive liquid contacts two thin electrodes that are electrically connected on the surface of a triboelectric friction layer, acting as an insulator material in a capacitor, i.e. containing also a bottom small electrode electrically connected to the top electrodes. In order to measure the capacitance variation the invention can comprise a signal acquisition module, connected to the electrodes of the transductor. In the simplest embodiment, the signal acquisition module comprises a resistive load. In a second step, the device works as a sensor which means the generated signal is actually representative of a sensed parameter. The invention relates to a self-powered triboelectric transductor device for drops and liquids, that comprises one or more transductors, being the device characterized in that each transductor comprises:

- a bottom electrode,
- a triboelectric friction element electrically charged, that comprises one or more layers on top of the bottom electrode, being the area of the triboelectric friction element at least as large as the area of the bottom electrode and,
- two or more exposed (i.e., non-buried) top electrodes electrically connected and placed on the triboelectric friction element on a surface opposite to the bottom electrode, being the said top electrodes of a smaller area than the bottom electrode and defining at least one gap between them, exposing the triboelectric friction layer to an external environment so that on contacting a drop of liquid makes an electrical connection between the top electrodes varying the capacitance of the transductor and generating an electrical signal.

The top electrodes are preferably at least five times smaller than the contacting and spreading area of any droplet or liquid reaching the triboelectric friction element, such that the contact area of the droplet or liquid covers at least the two exposed electrodes.

Therefore, the triboelectric or charged friction element is exposed to the external environment in such a way the contacting of a drop of a liquid with the top electrodes makes an electrical connection between the top electrodes varying the capacitance of the transductor and generating an electrical signal, which depends on the size of the bottom and top electrodes, the surface charging of the triboelectric friction element and the physicochemical properties of the drop or liquid.

The electrical signal generated by the triboelectric transductor device depends on the rate of the change of effective overlapping area, capacitance and resistive load ($R_L$) between the top and bottom electrodes, and the physicochemical properties of the liquid in contact with the triboelectric friction element and the top electrodes.

The device of the invention could further comprise one or more substrates placed under the transductor in contact with the bottom electrode, which could be rigid, flexible or non-flat, among others. The device of the invention can also work as a self-supported system without the need for a substrate.

Regarding the materials, the electrodes could be manufactured, without excluding other formulations, using thin metal foils, metallic thin films, metal wires, metal nanowires, transparent conducting oxides and polymers, graphene or metal meshes and could be manufactured having a round, triangular or rectangle shape, among others. Deposition techniques such as physical vapor deposition, chemical vapor deposition, wet chemistry methodologies, lithography and printing can be cited as examples of the available methodologies to produce such films.

The active area of the triboelectric transductor device of the invention is not limited in shape but it is intended to be much smaller than the contact area of the droplet or the liquid flow. The size of each transductor can range preferably from the micrometer to sub-millimeter scale to respond to the droplet contact in an instantaneous way, preferably, generating a voltage peak in the microsecond to millisecond range, being the duration of the peak one of the signal parameters to distinguish among different liquids or liquid chemical composition or ionic concentration. The invention can be multiplied in number in order to cover larger areas.

A defining feature of this invention is that the minimum size of the device is determined by the size of the droplet impinging on its surface, for droplets in the size of submillimeters to centimeters. Such that it is possible to design a fully functional array of transductors covering a total area similar to that of the impact area of a typical liquid droplet on a given surface.

The triboelectric friction element can be rigid or flexible and must be compatible with the injection or generation of electrical charge on its surface, positively or negatively, with the help of charge injection techniques, or it is charged by natural effects, such as source or upon contact with the liquid itself.

The triboelectric transductor device of the invention can work as a single self-powered transductor to produce electric signal from falling raindrops or any fluid flow or can integrate a large number of transductors close together forming a regular or irregular distribution and including different triboelectric surfaces or functionalization for sensing from several droplets at the same time or to produce transducing signals to different physicochemical properties at the same time.

The device can also integrate a large number of transductors with different electrodes sizes, shapes and circuit elements such as resistive loads to produce different transducing signals from a single drop or flow, to determine more accurately the physicochemical properties of the liquid. In this latter case, several transductors could interact with the same drop to multiply the generated information providing multidetection and multiplexing (sensing at the same time different chemical and physical factors but also from multiple analytes at the same time, as it can happen in complex liquids or in multiple drop events).

For obtaining more transducing signals, a high number of transductors could be manufactured using CMOS (complementary metal-oxide semiconductors), MEMS (microelectromechanical systems), IC (integrated Circuit), PCB (Printed Circuit Boards) technologies and others such as soft-lithography, shadow masking, printing, and laser patterning methods.

An array of transductors functions similar to a CCD or CMOS image transductors. In this case, each transductor can generate a sensing electric signal from the interaction with the incoming drop or fluid flow.

For aiding the fluid to move along the device, the transductors could be arranged in a sloped position with respect to a horizontal plane or present a hydrophobic or superhydrophobic surface or a surface with a certain slippery behaviour.

To respond to determined liquids the surface can be functionalized to depict a hydrophilic character.

The invention works as a self-powered transductor by using the generated signal as source of information from the impacting liquid. Thus, the invention produces different electric outputs (voltage or current) in response to different natures of drops contacting electrodes. The invention can be connected to a processing unit to analyse the shape, components, amplitude, duration and type of electrical signal (voltage and/or current and/or average peak power) generated by the contact of the liquid with the electrodes.

The amplitude, duration and shape of such an electrical signal depend on the transductor device characteristics and on the chemical and electrical nature of the liquid or fluid drop, its kinetic energy, drop and surface temperatures, volume and contact area of the drop, etc.

Therefore, the characteristics of the liquids contacting the device are derived from the characteristics of the electrical signal generated by said liquids, thus, allowing the detection of chemical and physical properties of the liquid, as well as but not limited to, liquid condensation and droplets size and displacement at different scales (down to microscale) including conductivity, chemical composition, ionic concentration, impurities, temperature, viscosity, drop size, drop impact position, flowing rate, etc. Hence, the electrical signal can be used as sensor signal to detect droplets from different liquids, salts contents or pollutants in water, location of the droplet sources, water condensation, the dew point, presence of acidic rain, specific molecules or biomolecules of interest, etc.

In this case, the surface of the triboelectric friction element also could be chemically functionalized to respond to certain analytes or agents. For instance, the triboelectric friction element can be activated by surface functionalization to produce a specific electric signal when a drop of blood from a human with a certain disease contacts the electrodes.

The device of the invention generates the voltage signal from a triboelectric effect by varying the capacitance, $C_{var}$, of the transductor upon interaction with the liquid. When the liquid makes a contact with the electrodes, the effective overlapping area $A_e$ of the capacitor suddenly increases to $A_e^{Max}$ which makes the total capacitance of the device to increase to $C_{max}$ instantaneously.

Before the drop reaches the top electrodes, the effective overlapping area between the top and bottom electrodes is at minimum value of $A_e^{Min} = 2L_1 W$ and the capacitance is $C_{min} = \varepsilon_0 \varepsilon_r \frac{A_e^{Min}}{h}$. $L_1$ and W are the dimensions of each top electrode, $\varepsilon_0$ and $\varepsilon_r$ are the vacuum dielectric permittivity and relative permittivity of the friction layers correspondingly and h is the total thickness of the triboelectric friction element assuming only one layer exists between bottom and top electrodes.

Between the contact and non-contacting states, there is a sudden capacitive variation defined by the ratio r between $C_{max}$ (after the drop contact) and $C_{min}$ (before drop contact):

$$C_{min} = \varepsilon_0 \varepsilon_r \frac{A_e^{Min}}{h} \qquad \text{Eq. 1}$$

$$C_{max} = \varepsilon_0 \varepsilon_r \frac{A_e^{Max}}{h} \qquad \text{Eq. 2}$$

$$r = \frac{C_{max}}{C_{min}} = \frac{A_e^{Max}}{A_e^{Min}} \qquad \text{Eq. 3}$$

The dissipated power in a load ($R_L$) connected to the device can be calculated as:

$$P = k^2 V_{var}^2 \left(\frac{dA_e(t)}{dt}\right)^2 \qquad \text{Eq. 4}$$

wherein $V_{var}$ is a function of charges stored on the surface of the friction layer, and k is a constant defined as:

$$k = \left(\frac{\sqrt{R_L} C_0}{S}\right) \qquad \text{Eq. 5}$$

where $C_0$ is the constant capacitance due to the thickness and S the surface exposed area of the triboelectric element.

The sensed output signal is the voltage across the resistive load indicated by $V_L$. The faster the change of $A_e(t)$ in time is, the higher is the power delivered to the load $R_L$ and the higher is the amplitude of the $V_L$.

The key differencing characteristics of the present invention are:

1- A new mechanism for self-powered transductors from falling or moving droplets or drops in a fluid based on a sudden capacitance variation and triboelectrification of the sliding/receiving surface. The capacitance variation occurs as the result of instantaneous contact of a single drop with the top exposed electrodes electrically connected, changing its effective area. The chemical and electrical nature of the liquid and its interaction with the triboelectric surface define the shape, intensity and duration of the voltage (or current) peak, instantaneous and average power.

2- The friction triboelectric element must be charged either by injecting positive or negative charges on the element using injection techniques (plasma, e-beam, friction, etc) or by natural ways (drop movement, wind, etc).

3- There is no need for the drop to slip or move over a certain distance before contacting the electrodes which helps in reducing the area of the device, preferably, having an active area dimension of micrometre to sub-millimetre scale.

4- The condition for the active dimension of the invention in the micrometre to sub-millimeter scale, typically much smaller than the contact area of a falling drop (as in rainwater) or a liquid flow, provides for the instantaneous change of capacitance in the range from microseconds to milliseconds for peak generation (Voltage versus time, i.e., V-t, or Intensity versus time, i.e. I-t, or instantaneous power) depending on the physicochemical properties of the liquid. The peak duration and shape become a transducing signal for the properties of the liquid.

5- The condition for the active dimension of the invention in the micrometre to sub millimetre scale allows for the accommodation of such dimensions to respond to droplets with predetermined ranges of volumes or contact areas.

6- Providing the first self-powered transductor based on a triboelectric architecture that can be fabricated with sub-millimetre or micrometre dimensions using standard CMOS, soft-lithography, printing or laser patterning technologies.

7- Production of a highly integrated array of inventions using IC, CMOS, MEMS CCD technology, soft-lithography, printing, shadow masking, laser patterning, roll-to-roll processing, or other high yield manufacturing techniques. The integrated array can be made in combination with organic, polymeric, inorganic, hybrid, flexible, and transparent triboelectric elements. The array can be made including a single triboelectric surface or integrating different composition/functionalization triboelectric surfaces.

8- The array can be designed to provide information of different drops at the same time (to obtain average values or individual values of the same property) or to provide different physicochemical information from the same drop.

9- The integrated array can be formed by arrays of inventions with different sizes and shapes and connected to different capacitors or resistive loads or circuits elements in order to provide further physicochemical information of the analyte (drop volume, contact area, number of drops, position, temperature, viscosity, etc.).

10- The arrays can be designed to collect information from different falling drops or a flow of liquid or to detect different physicochemical properties from the same falling drop.

11- Self-powered transductor compatible with free-falling or moving drops (including rain, droplets moving in pipes, microfluidic channels, human veins, water and other liquids, including complex fluids such as blood) and without the need for external movement or vibration.

## DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows a schematic view of a first preferred embodiment of the triboelectric transductor device of the invention comprising a substrate.

Figure 2.- Shows a schematic view of the first preferred embodiment of the triboelectric transductor device of the invention with a drop being deposited over the device.

Figure 3.- Shows a schematic view of a second preferred embodiment of the device of the invention comprising a plurality of triboelectric transductors.

Figure 4.- Shows a schematic view of an array of triboelectric transductors, particularly, it shows the plurality of triboelectric transductors as an ordered regular array.

Figure 5.- Shows a plurality of transductors with different sizes or shapes forming an irregular distribution.

Figure 6.- Shows a schematic view of the second preferred embodiment of the invention where each drop being deposited over a number of triboelectric transductors.

Figure 7.- Shows a schematic view of the second preferred embodiment of the triboelectric transductors having shared electrodes and/or substrates.

Figure 8.- Shows a graph showing the average (integrated in time) peak output voltage (Vout) produced by the triboelectric invention using different types of water: milliQ, salty and rainwater.

Figure 9.- Shows a graph showing the peak output voltage (Vout) produced by the triboelectric transductor device of the invention using different types of liquids attending to their acidic compositions.

Figure 10.- Shows a graph showing the characteristic Vout - time peaks produced by the triboelectric transductor using different types of water: milliQ, salty and rainwater.

Figure 11.- Shows a graph showing the characteristic Vout - time peaks produced by a standard millimetric single-top electrode and extended bottom electrodes using different types of water: milliQ, salty and rainwater.

## PREFERRED EMBODIMENTS OF THE INVENTION

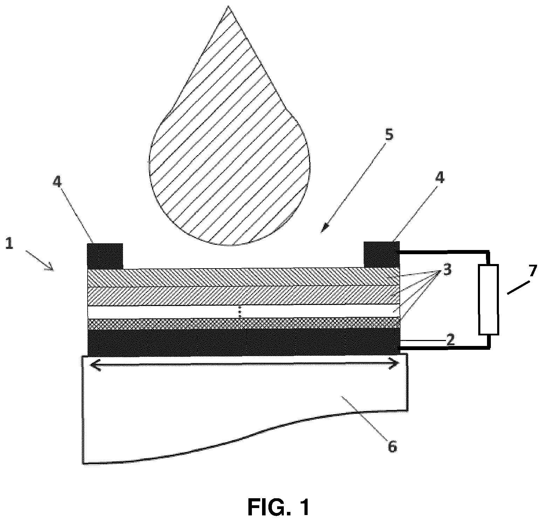

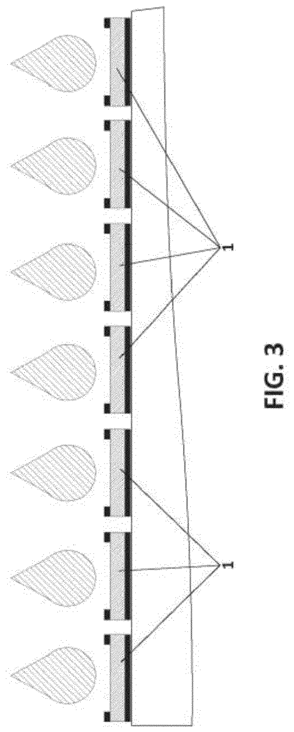

It is described below, with the help of figures 1 to 11, a preferred embodiment of the self-powered triboelectric transductor device for drops and liquids, object of the present invention.

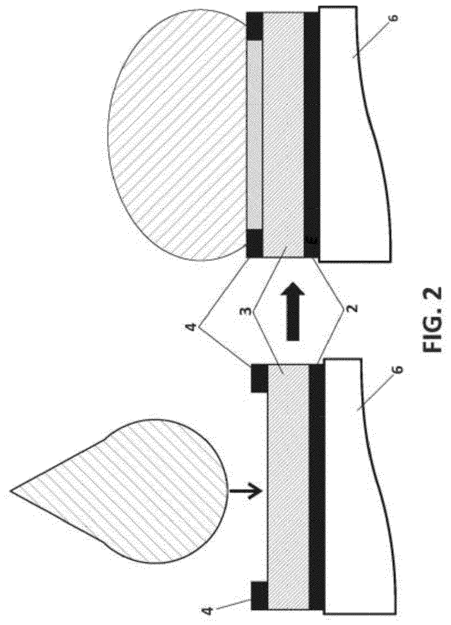

A first preferred embodiment of the invention is depicted in Figures 1 and 2, showing a device comprising a single triboelectric transductor (1) and a signal acquisition and processing module (7), which can comprise at least a resistive load. The transductor (1) comprises in turn, two exposed top electrodes (4) electrically connected and a bottom electrode (2) having dimensions ranging from a few micrometres to a few hundreds of micrometres. Top and bottom electrodes (2, 4) can vary in composition, shape, length, thickness and distance to detect drops of different sizes.

The bottom electrode (2), in this case, is placed on a substrate (6) over a certain area. On the bottom electrode (2), between it and the top electrodes (4) a triboelectric friction element (3), which can comprise one or more layers, is disposed. Between the top electrodes (4) a gap (5) is found, that is intended to allow a liquid to contact the triboelectric friction element (3). The top electrodes (4) are placed over the triboelectric friction element (3), each one with a certain area always smaller than the bottom electrode (2) area and smaller than the contact or spreading area of the drop or liquid with the triboelectric friction element (3).

The triboelectric friction element (3) is charged negatively or positively. This charge can be generated either by natural sources as the constant friction of the water drops, the flow of liquids, the wind or with the help of charge injection techniques. Regarding the materials, the triboelectric friction element (3) can be organic, inorganic or hybrid, thin films, foils or plates. With respect to conductivity, the triboelectric friction element (3) can be dielectric, insulator or semiconductor.

Dimension of each layer of the triboelectric friction element (3) such as a width, length and area can arrange from micrometre to sub millimetre scale. The thickness of each triboelectric friction element (3) can arrange from nanometer to millimeter scale.

Electrodes (2, 4) can be organic, inorganic, hybrid, semiconducting or metallic. Preferably, the electrodes (2, 4) are manufactured from conductive materials that can be metal films or transparent systems such as transparent conducting oxides or alternative conducting materials as conducting polymers, graphene, metal meshes and other materials formulations that comply with the electrical and optical requirements.

The invention can be manufactured as a self-standing transductor (1), or can be manufactured on any kind of support, such as a rigid, flexible and non-flat substrates (6), as shown in Figure 1.

The triboelectric friction element (3) can be charged and can have a determined wetting contact angle with the targeted liquid or fluid. Thus, in the case of water it is preferable that the surface presents a high contact angle and low roll-off-angle to facilitate the movement of the drops on the surface and also to favour multiple droplets bounce so that each droplet can generate multiple current peaks before leaving the surface of the device.

The angle between the triboelectric friction element (3) and the horizontal line could be greater or equal to 0º, thus, allowing the drops to move along the triboelectric friction element (3) after the interaction with the top electrode (4).

In an aspect of the invention, the device additionally comprises a signal acquisition and processing module (7), connected to the transductors (1), that can be applied to determine chemical composition of the liquid and physical properties, size of the drops, liquid movement direction, liquid viscosity, fluid regime for displacement, drop temperature, drop/surface relative temperature, water condensation, dew point, environmental analysis, wind, etc. In this case, the distribution of the transductor (1) can be designed to answer to the different analytes and environmental agents since the electrical signal generated by the invention can be used as sensing signal. The module (7) can incorporate artificial intelligence technology to elucidate the chemical composition of complex liquids.

In this way, the device analyses the shape, components, amplitude and type of electrical signal (voltage and/or current) generated by the contact of the liquid with the electrodes (2, 4). Also, the surface of the triboelectric friction element (3) can be further functionalized or modified (physically or chemically) to allow for a specific response to analytes and/or environmental agents.

In an example of the invention, the triboelectric friction element (3) is produced with a triboelectric film of PFA, negatively charged by an electron beam and with an active area of $0.81 \text{ mm}^2$. Electrodes (2, 4) are fabricated through a shadow mask by physical vapor deposition of silver. In this specific embodiment, the voltage curves acquired as monitoring signal present the form of a positive peak with an asymmetrical shape. The intensity, duration and shape of the peak depending on the liquid chemical nature, conductivity, volume, contact angle, and velocity of the drop (among other factors). In this example of the invention, the triboelectric friction element (3) is charged by means of an electron beam.

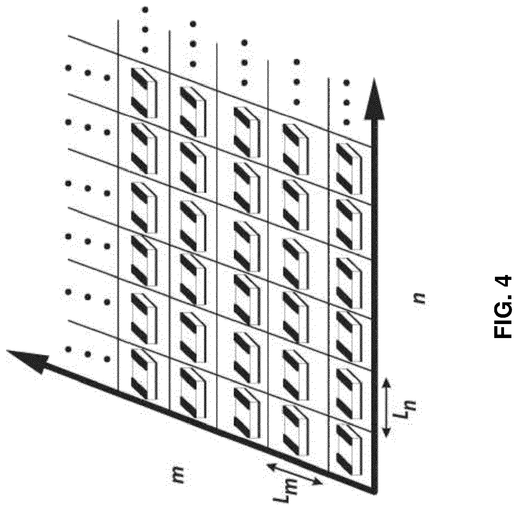

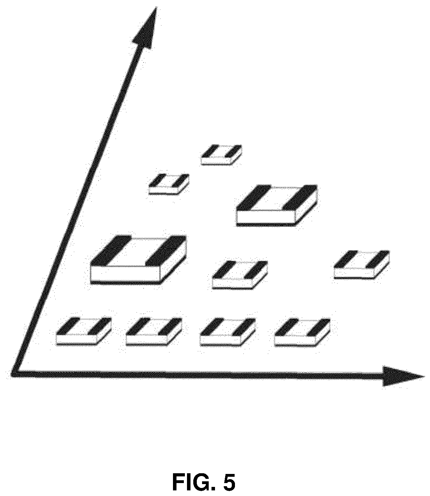

In another aspect of the invention, a set of transductors (1) are arranged to form an array or an irregular distribution as shown in Figures 4 and 5. The transductors (1) in the array can incorporate different surface functionalization to respond to different physicochemical properties of the liquid. Each transductor (1) can be connected to a different acquisition and processing module (7) or the acquisition and processing module (7) can be shared among several transductors (1).

The dimensions of the transductor (1) do not have to be the same for all of them and they can vary based on design requirements. The emplacement of the transductors (1) does not have to be regular or homogeneous and it can vary based on design requirements.

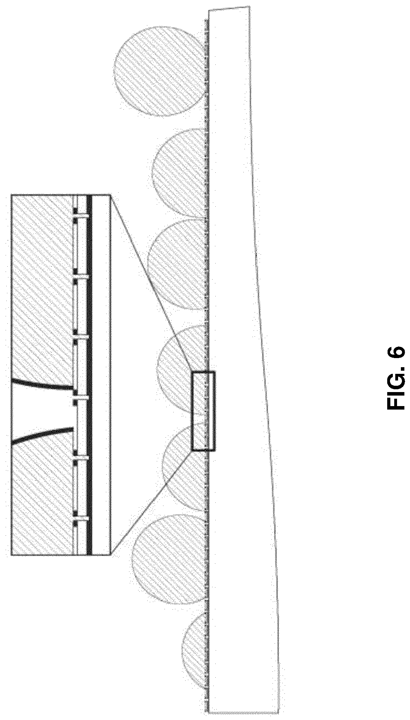

In another aspect of the invention, the array transductors (1) can analyse multiple raindrops or any fluid flow at the same time. As shown in Figure 6, the array of transductors (1) can be manufactured using CMOS, MEMS, IC, soft-lithography, printing and laser patterning technologies in micrometre and sub-millimetre scale to produce a large number of inventions in a very small area.

In Figure 5, every liquid drop will make contact with several transductors (1) at the same time to produce the electric signal. This requires scaling down the dimensions of the transductors (1) to micrometre or sub-millimetre range.

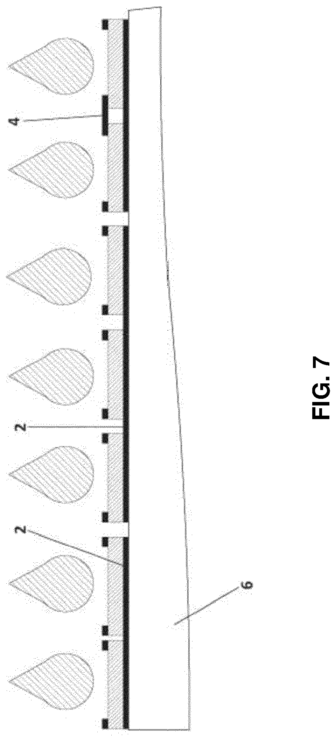

As depicted in Figure 7, several transductors (1) could share the substrate (6) or share a top electrode (4).

Configuring the transductor (1) in micrometre and sub-millimetre scales as an array or following an irregular distribution provides advantages on the performance of the output signal:

- A single drop can make contact with several transductors (1) at the same time and produce larger output signal with information on the drop contact area.
- A single drop can make contact with several transductors (1) at the same time each of them with a different shape or different surface functionalization to provide information on the drop impacting mechanism and chemical composition.
- A single drop can make contact with different transductors (1) after sliding or bouncing on the surface and produce a larger output signal with information on the drop movement.
- A single drop can make contact with different transductors (1) after sliding or bouncing on the surface and produce information on the drop movement direction and velocity.
- A single drop can make contact with different transductors (1) with different surface functionalization after sliding or bouncing on the surface and provide information on the chemical composition of the drop.
- The invention in the arrays can be connected to different resistive loads or impedance circuits or peak analysis modules in order to increase the information contained in the generated electrical signals.
- Several drops can make contact with different transductors (1) and produce information. The average value of all the signals containing such information can be extracted.
- Several drops can make contact with different transductors (1) and produce information. The particular signal containing such information can be extracted.

The invention is fully compatible with the fabrication relying on transparent materials. The invention is also fully compatible with the fabrication based on flexible materials on flexible supports, improving the compatibility with wearable concepts for health monitoring, as well as with vibration and mechanical deformation self-powered transductors.

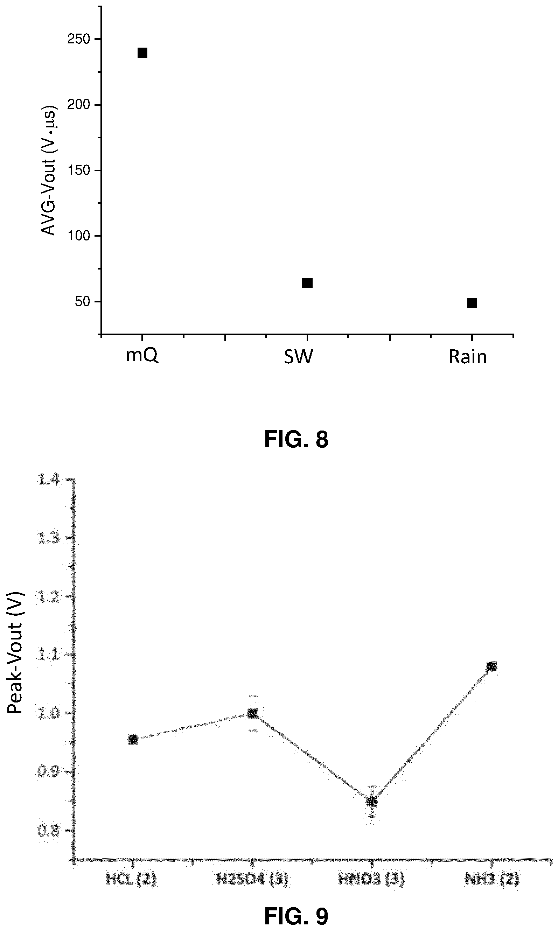

Figure 8 shows the different averaged output voltage (integrated in time) of the invention in response to different kinds of water drop making contact with the top electrodes (4) and triboelectric friction element (3). The drops include pure water (mΩ), rainwater (Rain) and 100 mM salt water (SW). Therefore, the invention is capable of distinguishing between conductivity of different drops.

Figure 9 shows a graph gathering the peak output voltage ($V_{out}$) produced by the device of the invention using different types of liquids (HCl, $H_2SO_4$, HNOs and $NH_3$) attending to their acidic compositions. This is an indication for application of the invention as a self-powered transductor to acidic rain.

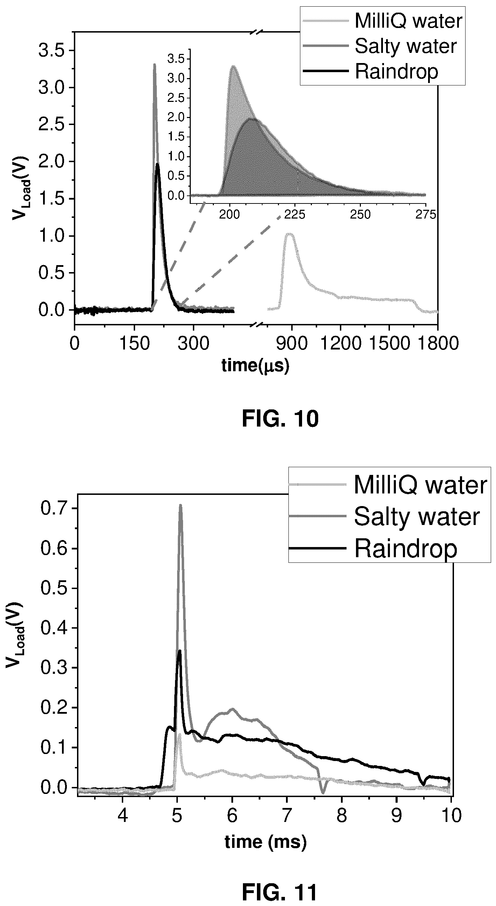

Figure 10 shows the characteristic $V_{out}$ - time peaks produced by the invention using different types of water: milliQ, salty and rainwater. This is an indication for application of the invention as a self-powered transductor relying on the time response and shape of the produced voltage.

Figure 11 presents a graph showing the characteristic $V_{out}$ - time peaks produced by a standard millimetric single-top electrode and extended bottom electrodes equivalent to those proposed in the reference "A droplet-based electricity generator with high instantaneous power density" by Xu, W., Zheng, H., Liu, Y. et al., Nature 578, 392-396 (2020)" and using different types of water: milliQ, salty and rainwater responding with similar peaks duration times and shapes to the three analytes. This is an indication of the requirements of the invention dimensions and configuration to be used as a transductor for water conductivity relying on the time response.

**Claims**

1. A self-powered triboelectric transductor device for drops and liquids, that comprises one or more transductors (1), being the device **characterized in that** each transductor (1) comprises:

   - a bottom electrode (2),
   - a triboelectric friction element (3) electrically charged, that comprises one or more layers on top of the bottom electrode (2), being the area of the triboelectric friction element (3) at least as large as the area of the bottom electrode (2) and,
   - two or more exposed top electrodes (4) electrically connected and placed on the triboelectric friction element (3) on a surface opposite to the bottom electrode (2), being the said top electrodes (4) of a smaller area than the bottom electrode (2) and defining at least one gap (5) between them, exposing the triboelectric friction layer (3) to an external environment so that on contacting a drop of liquid makes an electrical connection between the top electrodes (4) varying the capacitance of the transductor (1) and generating an electrical signal.

2. The device of claim 1, wherein it further comprises a signal acquisition and processing module (7) connected to the top (4) and bottom (2) electrodes of the transductors (1) and configured to analyse the shape, components, amplitude, duration and type of the electrical signal.

3. The device of anyone of claims 1 or 2, further comprising one or more substrates (6) placed under the transductors (1), in contact with the bottom electrode (2).

4. The device of claim 3, wherein the substrates (6) are rigid, flexible or non-flat.

5. The device of claim 1, wherein it comprises two or more transductors (1) forming a regular or irregular array.

6. The device of claim 5, wherein it comprises two or more transductors (1) forming an array and wherein each transductor (1) comprises a substrate (6).

7. The device of claim 5, wherein it comprises two or more transductors (1) forming an array and wherein the device comprises a substrate (6) common for all the transductors (1).

8. The device of any of the preceding claims, wherein the size of each transductors (1) ranges in a micrometre to submillimeter scale.

9. The device of any of the preceding claims, wherein the electrodes (2, 4) are made of a material selected between metal foils, metallic thin films, metal wires and nanowires, transparent conducting oxides and polymers and graphene or metal meshes.

10. The device of any of the preceding claims, wherein the electrodes (2, 4) have a shape selected between round, triangular and rectangular.

11. The device of any of the preceding claims, wherein the transductors (1) are arranged in a sloped position with respect to a horizontal plane.

12. The device of any of the preceding claims, wherein the triboelectric friction element (3) is chemically functionalized to respond to a specific analyte or agent.

13. The device of any of the preceding claims, wherein the triboelectric friction element (3) is a dielectric, insulator or semiconductor.

14. The device of any of the preceding claims, wherein the triboelectric friction element (3) and the electrodes (2, 4) are made of a transparent material.

15. The device of any of the preceding claims, wherein the electrodes (2, 4) and/or the triboelectric friction element (3) and are made of a hydrophobic or superhydrophobic material.

**FIG. 1**

FIG. 2

FIG. 3

FIG. 4

FIG. 5

FIG. 6

FIG. 7

**FIG. 8**

**FIG. 9**

**FIG. 10**

**FIG. 11**

Europäisches Patentamt
European Patent Office
Office européen des brevets

# EUROPEAN SEARCH REPORT

Application Number

EP 23 38 2176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU WEI ET AL: "Study of the enhanced electricity output of a sliding droplet-based triboelectric nanogenerator for droplet sensor design", NANO ENERGY, vol. 98, 1 July 2022 (2022-07-01), page 107166, XP093069318, NL ISSN: 2211-2855, DOI: 10.1016/j.nanoen.2022.107166 Retrieved from the Internet: URL:https://pdf.sciencedirectassets.com/280655/1-s2.0-S2211285522X00062/1-s2.0-S2211285522002476/main.pdf?X-Amz-Security-Token=IQoJb3JpZ2luX2VjEDoaCXVzLWVhc3QtMSJGMEQCIFrWPNXWXImlVsEJLhhCacQxvyNVcxF4vscXGa3eJ+bMAiAh15XEyA2LnXUiBZFO2d5rFixDUzeVmwA3XP/frunR2Sq7BQjT/////////8BEAUaDDA1OTAwMzU0Njg2NSIMmTl9B> * figures 1-6 * * page 1 - page 6 * ----- | 1-4, 8-11, 13-15 | INV. G01N27/22 H02N1/04 G01N15/00 H02N11/00 |
| X | US 2006/249402 A1 (SNOW ERIC S [US] ET AL) 9 November 2006 (2006-11-09) * figures 1-14 * * paragraph [0010] - paragraph [0091] * ----- | 1-10,12, 13 | TECHNICAL FIELDS SEARCHED (IPC) G01N H02N |
| A | KIM INKYUM ET AL: "A triboelectric nanogenerator using silica-based powder for appropriate technology", SENSORS AND ACTUATORS A: PHYSICAL, ELSEVIER BV, NL, vol. 280, 17 July 2018 (2018-07-17), pages 85-91, XP085478255, ISSN: 0924-4247, DOI: 10.1016/J.SNA.2018.07.013 * page 85 * ----- -/-- | 1-15 | |

The present search report has been drawn up for all claims

| Place of search | Date of completion of the search | Examiner |
|---|---|---|
| Munich | 9 August 2023 | Colasanti, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 3**

Europäisches
Patentamt

European
Patent Office

Office européen
des brevets

## EUROPEAN SEARCH REPORT

Application Number

EP 23 38 2176

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2016 0149402 A (UNIST [KR]) 28 December 2016 (2016-12-28) * figures 1, 2 * | 6,7 | |
| A | CHENG XIAOLIANG ET AL: "A high-efficiency transparent electrification-based generator for harvesting droplet energy", 2015 TRANSDUCERS – 2015 18TH INTERNATIONAL CONFERENCE ON SOLID-STATE SENSORS, ACTUATORS AND MICROSYSTEMS (TRANSDUCERS), IEEE, 21 June 2015 (2015-06-21), pages 62-65, XP033189220, DOI: 10.1109/TRANSDUCERS.2015.7180861 [retrieved on 2015-08-05] * figure 1 * * page 62 * | 14 | |
| A | KHANDELWAL GAURAV ET AL: "Triboelectric Nanogenerators as Power Sources for Chemical Sensors and Biosensors", ACS OMEGA, vol. 7, no. 49, 29 November 2022 (2022-11-29), pages 44573-44590, XP093072353, US ISSN: 2470-1343, DOI: 10.1021/acsomega.2c06335 Retrieved from the Internet: URL:https://pubs.acs.org/doi/pdf/10.1021/acsomega.2c06335> * the whole document * | 1-15 | TECHNICAL FIELDS SEARCHED (IPC) |

-/--

The present search report has been drawn up for all claims

| Place of search | Date of completion of the search | Examiner |
|---|---|---|
| Munich | 9 August 2023 | Colasanti, Katharina |

EPO FORM 1503 03.82 (P04C01)

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG WEI ET AL: "A High Performance Triboelectric Nanogenerator Based on MXene/Graphene Oxide Electrode for Glucose Detection", MATERIALS, vol. 16, no. 2, 15 January 2023 (2023-01-15), page 841, XP093072352, DOI: 10.3390/ma16020841 * the whole document * ----- | 1-15 | |

TECHNICAL FIELDS
SEARCHED     (IPC)

The present search report has been drawn up for all claims

| Place of search | Date of completion of the search | Examiner |
|---|---|---|
| Munich | 9 August 2023 | Colasanti, Katharina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 3 of 3

## ANNEX TO THE EUROPEAN SEARCH REPORT
## ON EUROPEAN PATENT APPLICATION NO.

EP 23 38 2176

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| US 2006249402 | A1 | 09-11-2006 | US 2006249402 A1 | | 09-11-2006 |
| | | | WO 2006099518 A2 | | 21-09-2006 |
| KR 20160149402 | A | 28-12-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105099260
- US 9921678 B2
- WO 2019171295 A2
- WO 2019155376 A
- EP 3783328 A1
- EP 3742143 A1

- EP 3131195 A1
- US 8742649 B2
- US 10848079 B2
- US 2019280620 A
- WO 15154693 A

**Non-patent literature cited in the description**

- **Z. H. LIN et al.** Harvesting Water Drop Energy by a Sequential Contact-Electrification and Electrostatic-Induction Process. *Adv. Mater.,* 2014, vol. 26, 4690-4696
- **XU, W. ; ZHENG, H. ; LIU, Y. et al.** A droplet-based electricity generator with high instantaneous power density. *Nature,* 2020, vol. 578, 392-396
- **Z. WANG et al.** Triboelectric Flow Sensor with Float-Cone Structure for Industrial Pneumatic System Monitoring. *Advanced Materials Technologies,* 2019, vol. 4, 1900704
- **T. K. PHAN et al.** A Self-Powered and Low-Pressure Loss Gas Flowmeter Based on Fluid-Elastic Flutter Driven Triboelectric Nanogenerator. *Sensors,* 2020, vol. 20, 729

- **Z. XU et al.** Self-powered multifunctional monitoring and analysis system based on dual-triboelectric nanogenerator and chitosan/activated carbon film humidity sensor. *Nano Energy,* 2022, vol. 94, 106881
- **Y. ZENG et al.** Self-powered rain droplet sensor based on a liquid-solid triboelectric nanogenerator. *Nano Energy,* 2022, vol. 98, 107316
- **HAIWEI LIU et al.** Real-Time Acid Rain Sensor Based on a Triboelectric Nanogenerator Made of a PTFE-PDMS Composite Film. *ACS Appl. Electron. Mater.,* 2021, vol. 3, 4162-4171